# EUROPEAN PATENT APPLICATION

(11) **EP 4 618 233 A1**
(43) Date of publication of application: **17.09.2025**
(21) Application number: 25163492.9
(22) Date of filing: 13.03.2025
(51) Int. Cl.: H01M 10/42, H01M 10/48, H01M 50/569, H01M 50/548

(54) **CHIP ASSEMBLY FOR BATTERY, BATTERY, ENERGY STORAGE DEVICE, AND ELECTRICAL DEVICE**

(30) Priority: 15.03.2024 CN 202420521467 U
(71) Applicant: BYD Company Limited, Shenzhen, Guangdong 518118 (CN)
(72) Inventor: WAN, Liyang, Shenzhen, 518118 (CN); ZHAN, Yingxin, Shenzhen, 518118 (CN); CAO, Bingxu, Shenzhen, 518118 (CN); YUAN, Wansong, Shenzhen, 518118 (CN)
(74) Representative: Mathys & Squire

(57) **Abstract**

A chip assembly for a battery, a battery, an energy storage device, and an electrical device. The chip assembly for a battery includes a chip, a positive component, and a negative component. The chip includes a circuit structure and a detection structure. The detection structure is electrically connected to the circuit structure. One end of the positive component is electrically connected to the circuit structure, and the other end of the positive component is suitable for being connected to a positive electrode of the battery. One end of the negative component is electrically connected to the circuit structure, and the other end of the negative component is suitable for being connected to a negative electrode of the battery. The chip assembly is connected to the positive electrode of the battery through the positive component, the chip assembly is connected to the negative electrode of the battery through the negative component, and a closed loop is formed between the chip assembly and the battery. An electrode core of the battery may supply power to the chip assembly to form an integrated self-powered structure, and the degree of integration of the battery and the chip assembly is improved.

## Description

### FIELD

The present disclosure relates to the technical field of power batteries, and in particular, to a chip assembly for a battery, a battery, an energy storage device, and an electrical device.

### BACKGROUND

Power batteries are the key to developing new energy vehicles. With accelerated development of vehicle electrification transformation, cycle life and safety of the power batteries have become the key to restrict large-scale popularization of electric vehicles.

In a related art, a power battery management system usually adopts a technical solution of an external detection apparatus, and the external detection apparatus may monitor a battery state. To make a battery structure more compact, a detection apparatus is placed at a battery core of a battery. However, the detection apparatus in the related art, effective detection can only be implemented with the need of external power supply or connection to an external power supply device. Therefore, degree of integration of the detection apparatus and the battery is low, and there is room for improvement.

### SUMMARY

The present disclosure is intended to resolve at least one of the foregoing technical problems in a related art. In view of this, the present disclosure provides a chip assembly for a battery. The chip assembly may be electrically connected to the battery to form an integrated self-powered battery chip assembly, and degree of integration of the battery and the chip assembly is improved.

The present disclosure further provides a battery.

The present disclosure further provides an energy storage device.

The present disclosure further provides an electrical device.

The chip assembly for a battery according to an embodiment of the present disclosure includes a chip, a positive component, and a negative component. The chip includes a circuit structure and a detection structure. The detection structure is electrically connected to the circuit structure. One end of the positive component is electrically connected to the circuit structure, and the other end of the positive component is suitable for being connected to a positive electrode of the battery. One end of the negative component is electrically connected to the circuit structure, and the other end of the negative component is suitable for being connected to a negative electrode of the battery.

According to the chip assembly in an embodiment of the present disclosure, the chip assembly is connected to a positive electrode of the battery through the positive component. The chip assembly is connected to a negative electrode of the battery through the negative component. A closed loop is formed between the chip assembly and the battery. The electrode core of the battery may supply power to the chip assembly to form an integrated self-powered battery chip assembly, and degree of integration of the battery and the chip assembly is improved.

In some embodiments, the chip further includes a wireless transmission structure. The wireless transmission structure is electrically connected to the circuit structure, and the wireless transmission structure is at least configured to transmit a signal detected by the detection structure to an external device in a wireless communication manner.

In some embodiments, the positive component is electrically connected to the circuit structure through a first conducting wire; and/or, the negative component is electrically connected to the circuit structure through a second conducting wire.

In some embodiments, an outer surface of the first conducting wire is coated with an insulating layer, and an outer surface of the second conducting wire is coated with an insulating layer.

In some embodiments, the chip further includes a chip housing, the circuit structure and the detection structure are arranged in the chip housing, the other end of the positive component and the other end of the negative component are located outside the chip housing, and the outer surface of the chip housing is coated with an insulating layer.

In some embodiments, a length of each of the positive component and the negative component ranges from 0.3 cm to 200 cm; and/or, a width of each of the positive component and the negative component ranges from 0.2 cm to 50 cm; and/or, a thickness of each of the positive component and the negative component ranges from 0.2 mm to 5 cm.

In some embodiments, a volume of the chip ranges from 5 mm³ to 100 cm³; and/or, a weight of the chip ranges from 1 mg to 100 g.

In some embodiments, a shape of the chip is a cuboid, a cube, or a polyhedron.

In some embodiments, the detection structure includes a detection tape, one end of the detection tape is connected to the circuit structure, and the other end of the detection tape extends out of the circuit structure.

In some embodiments, a length of the detection tape ranges from 0.5 cm to 100 cm; and/or, a width of the detection tape ranges from 0.2 cm to 5 cm; and/or, a thickness of the detection tape ranges from 0.2 mm to 1 cm.

A battery according to an embodiment of the present disclosure includes a battery housing, an electrode core, and the chip assembly according to an embodiment of the of the present disclosure. A positive terminal and a negative terminal are arranged on the battery housing. The chip assembly is arranged in the battery housing. The electrode core is arranged in the battery housing. The electrode core has a positive tab and a negative tab. A positive component and the positive tab are connected to the positive terminal. A negative component and the negative tab are connected to the negative terminal.

According to the battery in an embodiment of the present disclosure, the chip assembly is arranged inside the battery housing, and the chip assembly can monitor a single battery and can achieve high-precision evaluation and safety warning of an operation state and a health state of the battery, thereby greatly improving the safety performance of the battery. Moreover, the chip assembly is connected to the positive terminal of the battery through the positive component, the chip assembly is connected to the negative terminal of the battery through the negative component, and the closed loop is formed between the chip assembly and the electrode core of the battery. The electrode core of the battery may supply power to the chip assembly to form an integrated self-powered battery chip assembly, and the degree of integration of the battery and the chip assembly is improved. In addition, the positive component and the positive tab are connected to the positive terminal, and the negative component and the negative tab are connected to the negative terminal. On one hand, an internal structure of the battery is more compact, and the space utilization rate of internal space of the battery is improved. On the other hand, the electrode core can be monitored to improve the accuracy of evaluation and the safety of the battery.

In some embodiments, the battery housing includes a housing body, a positive cover plate, and a negative cover plate. The positive cover plate is arranged at one end of the housing body. The positive terminal is arranged on the positive cover plate. The negative cover plate is arranged at the other end of the housing body. The negative terminal is arranged on the negative cover plate. The positive component is arranged at the positive terminal. The negative component is arranged at the negative terminal. The chip is arranged at the positive terminal or the negative terminal or a position between the positive terminal and the negative terminal.

An energy storage device according to an embodiment of the present disclosure includes multiple batteries according to an embodiment of the present disclosure.

According to the energy storage device in an embodiment of the present disclosure, the foregoing battery is arranged, the chip assembly is arranged inside the battery housing, and the chip assembly can monitor a single battery and can achieve high-precision evaluation and safety warning of an operation state and a health state of the battery, thereby greatly improving the safety performance of the battery. Moreover, the chip assembly is connected to the positive terminal of the battery through the positive component, the chip assembly is connected to the negative terminal of the battery through the negative component, and the closed loop is formed between the chip assembly and the electrode core of the battery. The electrode core of the battery may supply power to the chip assembly to form an integrated self-powered battery chip assembly, and the degree of integration of the battery and the chip assembly is improved. In addition, the positive component and the positive tab are connected to the positive terminal, and the negative component and the negative tab are connected to the negative terminal. On one hand, an internal structure of the battery is more compact, and the space utilization rate of internal space of the battery is improved. On the other hand, the electrode core can be monitored to improve the accuracy of evaluation and the safety of the battery.

An electrical device according to an embodiment of the present disclosure includes the energy storage device according to an embodiment of the present disclosure.

According to the electrical device according to an embodiment of the present disclosure, the foregoing energy storage device is arranged, the chip assembly is arranged inside the battery housing, and the chip assembly can monitor a single battery and can achieve high-precision evaluation and safety warning of an operation state and a health state of the battery, thereby greatly improving the safety performance of the battery. Moreover, the chip assembly is connected to the positive terminal of the battery through the positive component, the chip assembly is connected to the negative terminal of the battery through the negative component, and the closed loop is formed between the chip assembly and the electrode core of the battery. The electrode core of the battery may supply power to the chip assembly to form an integrated self-powered battery chip assembly, and the degree of integration of the battery and the chip assembly is improved. In addition, the positive component and the positive tab are connected to the positive terminal, and the negative component and the negative tab are connected to the negative terminal. On one hand, an internal structure of the battery is more compact, and the space utilization rate of internal space of the battery is improved. On the other hand, the electrode core can be monitored to improve the accuracy of evaluation and the safety of the battery.

Additional aspects and advantages of the present disclosure are partially provided in the following description, and partially become apparent in the following description or understood through the practice of the present disclosure.

### BRIEF DESCRIPTION OF THE DRAWINGS

FIG. 1 is a schematic diagram of a chip assembly according to an embodiment of the present disclosure;
FIG. 2 is a schematic diagram of a chip assembly including a first conducting wire according to an embodiment of the present disclosure;
FIG. 3 is a schematic diagram of a chip assembly including a second conducting wire according to an embodiment of the present disclosure;
FIG. 4 is a schematic diagram of a chip assembly including a first conducting wire and a second conducting wire according to an embodiment of the present disclosure;
FIG. 5 is a schematic diagram of a chip assembly including a detection tape according to an embodiment of the present disclosure;
FIG. 6 is a schematic diagram of a connection between a chip assembly including a second conducting wire and an electrode core according to an embodiment of the present disclosure;
FIG. 7 is a schematic diagram of a connection between a chip assembly including a first conducting wire and an electrode core according to an embodiment of the present disclosure;
FIG. 8 is a schematic diagram of a connection between a chip assembly including a first conducting wire and a second conducting wire and an electrode core according to an embodiment of the present disclosure;
FIG. 9 is a schematic diagram of a battery according to an embodiment of the present disclosure;
FIG. 10 is a schematic diagram of an energy storage device according to an embodiment of the present disclosure; and
FIG. 11 is a schematic diagram of an electrical device according to an embodiment of the present disclosure.

In the drawings:
electrical device 2000, and energy storage device 1000;
chip assembly 100, and battery 200;
chip 10, positive component 101, negative component 102, first conducting wire 11, second conducting wire 12, and detection tape 13;
electrode core 20, positive tab 201, negative tab 202, positive cover plate 21, positive terminal 211, negative cover plate 22, and negative terminal 222; and
insulating layer 30.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The following embodiments described with reference to the accompanying drawings are exemplary, and are intended to describe the present disclosure and cannot be construed as a limitation to the present disclosure.

In the description of the present disclosure, terms "first" and "second" are used only for the purpose of description, and cannot be understood as indicating or implying relative importance or implicitly specifying a quantity of indicated technical features. Therefore, a feature defined by "first" or "second" may explicitly or implicitly include one or more of the features. In the description of the present disclosure, unless otherwise limited definitely and specifically, "multiple" means at least two, for example, two or three.

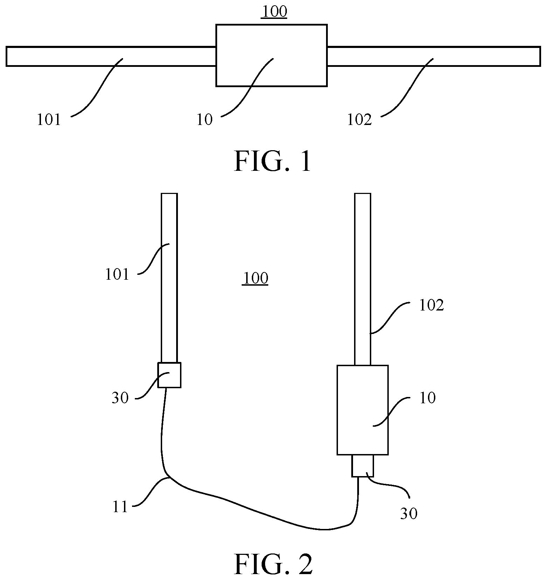

A chip assembly 100 for a battery 200 according to an embodiment of the present disclosure will be described in detail below with reference to FIG. 1 to FIG. 11.

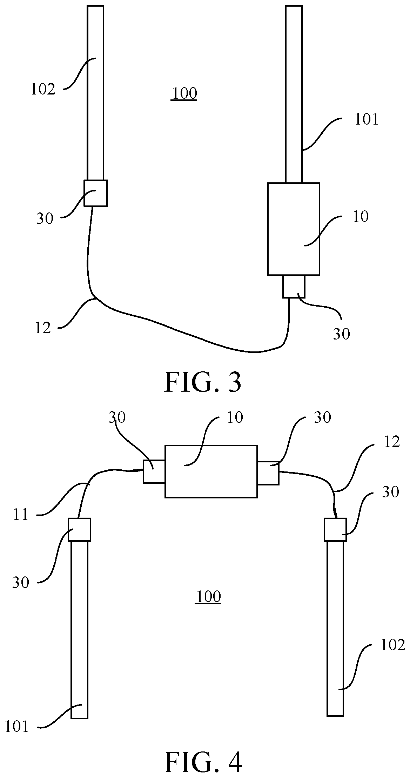

Referring to FIG. 1 and FIG. 4, the chip assembly 100 for a battery 200 according to an embodiment of the present disclosure includes a chip 10, a positive component 101, and a negative component 102.

A circuit structure has an integrated circuit. A detection structure is electrically connected to the circuit structure, and is specifically connected to the integrated circuit on the circuit structure. Therefore, an electrical signal may be transmitted between the detection structure and the circuit structure to detect internal conditions of the battery 200.

Optionally, the circuit structure may be a circuit board, a thin film circuit, or circuit structures in other forms.

It is to be further noted that, the detection structure may be a temperature sensor and connectors associated with the temperature sensor to detect a temperature of the battery 200. The detection structure may be a stress detection apparatus to detect stress conditions inside the battery 200. The detection structure may alternatively be an air pressure detection apparatus to detect an air pressure inside the battery 200. That is, according to different monitoring content and requirements, the detection structure inside the chip 10 may be replaced according to different test requirements. Therefore, the detection structure includes, but is not limited to, the temperature sensor, the stress detection apparatus, the air pressure detection apparatus, and the like.

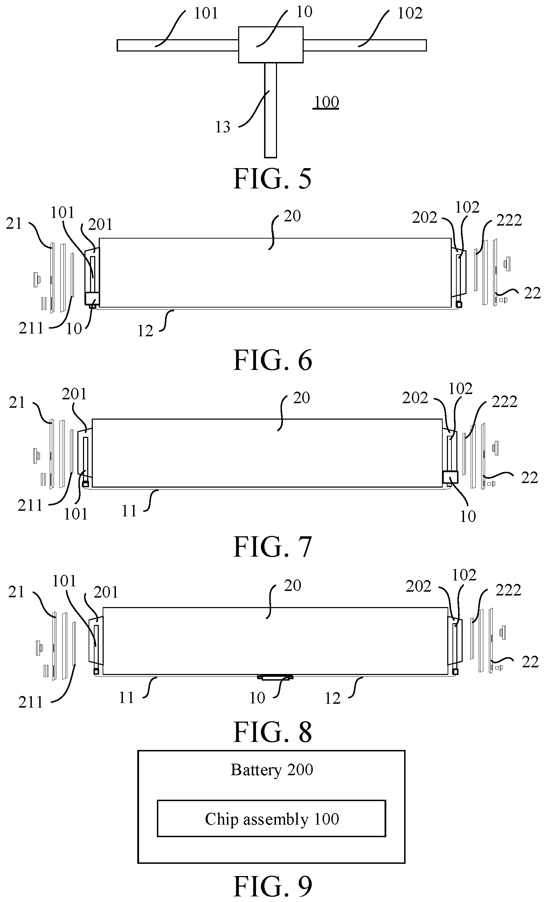

With reference to FIG. 6 to FIG. 8, one end of the positive component 101 is electrically connected to the circuit structure, and the other end of the positive component 101 may be connected to a positive terminal 211 of the battery 200. One end of the negative component 102 is electrically connected to the circuit structure, and the other end of a negative component 102 may be connected to a negative terminal 222 of the battery 200. Thus, the detection structure is electrically connected to the circuit structure. Electrical connection between the circuit structure and the battery 200 is realized through the positive component 101 and the negative component 102. That is, the battery 200 may supply power to the detection structure, and then the battery 200 may supply power to the chip assembly 100.

In a related art, the detection structure achieves effective detection through external power supply and electrical connection to an external power supply device. In the present disclosure, the battery 200 may supply power to the detection structure. The battery 200 and the chip assembly 100 form an integrated self-powered battery chip assembly. An external power supply device does not need to be arranged to supply power to the chip assembly 100, so that degree of integration of the battery 200 and the chip assembly 100 is improved.

It is to be noted that, the average power consumption of the chip assembly 100 during normal operation is between 1 mW and 100 mW, and the power consumption during hibernation is between 1 µW and 100 µW. The average power consumption of the chip assembly 100 is far less than the average power consumption of the battery 200 during operation, and an impact of average power consumption loss of the chip assembly 100 on the battery 200 is negligible.

According to the chip assembly 100 in an embodiment of the present disclosure, the chip assembly 100 is connected to the positive terminal 211 of the battery 200 through the positive component 101, the chip assembly 100 is connected to the negative terminal 222 of the battery 200 through the negative component 102, and a closed loop is formed between the chip assembly 100 and the battery 200. An electrode core 20 of the battery 200 may supply power to the chip assembly 100 to form an integrated self-powered battery chip assembly, so that the degree of integration of the battery 200 and the chip assembly 100 is improved.

In some embodiments, the chip 10 further includes a wireless transmission structure. The wireless transmission structure may be electrically connected to the circuit structure. The wireless transmission structure may transmit signals in a wireless communication manner. The wireless transmission structure is at least configured to transmit the signals to an external device. The transmitted signals may include a signal detected by the detection structure, or, the signals may include a circuit structure state signal of the chip assembly 100 and a signal detected by the detection structure. The wireless transmission structure is configured to transmit the signals, and the signals do not need to be exported from an interior of the battery 200 by an additional connecting wire, so that a battery housing structure does not need to be perforated for a connecting wire to pass through, which is beneficial to improving the overall sealing performance of the battery 200.

In some embodiments, the wireless transmission structure may transmit the signals to an external device at preset intervals. Alternatively, in some other embodiments, the wireless transmission structure further includes a receiving module and a transmission module. In a case that the receiving module receives a trigger command, the transmission module transmits a signal to an external device.

Optionally, a communication manner of the wireless transmission structure may be 4G communication, 5G communication, Bluetooth, and the like.

In an example, a communication rate of the chip 10 is between 2 Mbps and 10 Mbps, a stable communication distance is between 0.1 m and 1000 m, and a transmission delay is less than 10 ms.

As shown in FIG. 2 to FIG. 4, in some embodiments, the positive component 101 is electrically connected to the circuit structure through a first conducting wire 11; and/or, the negative component 102 is electrically connected to the circuit structure through a second conducting wire 12. Connections between the circuit structure and the positive component 101 and between the circuit structure and the negative component 102 may adopt either a direct connection solution, or a conducting wire transfer solution. In a conducting wire transfer manner, mounting positions of the chip 10 and the circuit structure may be more flexible, the positions of the positive component 101 and the negative component 102 do not need to be too close, and the positions may be adjusted according to different battery 200 types and monitoring types, so that the adaptability of the chip assembly 100 is improved.

As shown in FIG. 2, in an example, the positive component 101 may be electrically connected to the circuit structure through the first conducting wire 11, and the negative component 102 is directly connected to the circuit structure.

As shown in FIG. 3, in an example, the positive component 101 may be directly connected to the circuit structure, and the negative component 102 may be connected to the circuit structure through the second conducting wire 12.

As shown in FIG. 4, in an example, the positive component 101 may be connected to the circuit structure through the first conducting wire 11, and the negative component 102 may be connected to the circuit structure through the second conducting wire 12.

It is to be further noted that the first conducting wire 11 and the second conducting wire 12 may be made of one or a combination of copper, silver, aluminum and some alloy materials with good conductivity.

As shown in FIG. 2 to FIG. 4, in some embodiments, an outer surface of the first conducting wire 11 is coated with an insulating layer 30 (not shown). An outer surface of the second conducting wire 12 is coated with an insulating layer 30 (not shown). The outer surfaces of the first conducting wire 11 and the second conducting wire 12 are coated with the insulating layers 30, which can effectively prevent the conducting wires from being corroded by an electrolyte in the battery 200.

In some embodiments, the chip 10 includes a chip housing. The circuit structure and the detection structure are arranged in the chip housing. The chip housing can protect the circuit structure and the detection structure. Both the other end of the positive component 101 and the other end of the negative component 102 are located outside the chip housing. The outer surface of the chip housing is coated with the insulating layer 30 (not shown). A connection between the first conducting wire 11 and the chip housing is coated with an insulating layer 30. A connection between the second conducting wire 12 and the chip housing is coated with an insulating layer 30. The insulating layers 30 are arranged at the foregoing positions, the chip housing may be protected, and the connection between the first conducting wire 11 and the chip housing and the connection between the second conducting wire 12 and the chip housing may be protected, so that the chip housing, the connection between the first conducting wire 11 and the chip housing and the connection between the second conducting wire 12 and the chip housing are prevented from being corroded by an electrolyte in the battery 200.

Optionally, the chip housing may be a hard housing, or may be a soft housing.

In an example, the insulating layer 30 may be made of one or a combination of materials such as polyimide, polypropylene, and polyethylene.

In some embodiments, a length of each of the positive component 101 and the negative component 102 ranges from 0.3 cm to 200 cm; and/or, a width of each of the positive component 101 and the negative component 102 ranges from 0.2 cm to 50 cm; and/or, a thickness of each of the positive component 101 and the negative component 102 ranges from 0.2 mm to 5 cm. The lengths, the widths, and the thicknesses of the positive component 101 and the negative component 102 may be adjusted to adapt to different batteries 200.

Optionally, the length of the positive component 101 may be 0.3 cm, 1.7 cm, 20 cm, 47 cm, 91 cm, 110 cm, 149 cm, 178 cm, 200 cm, or the like. Certainly, the length of the positive component 101 may alternatively be other values between 0.3 cm and 200 cm, which will not be listed one by one here. The length of the negative component 102 may alternatively be 0.3cm, 2.8 cm, 30 cm, 49 cm, 81 cm, 110 cm, 142 cm, 168 cm, 200 cm, or the like. Certainly, the length of the negative component 102 may alternatively be other values between 0.3 cm and 200 cm, which will not be listed one by one here.

Optionally, the width of the positive component 101 may be 0.2 cm, 6.7 cm, 16.0 cm, 24 cm, 27 cm, 34.2 cm, 41.6 cm, 45 cm, 50 cm, or the like. Certainly, the width of the positive component 101 may alternatively be other values between 0.2 cm and 50 cm, which will not be listed one by one here. The width of the negative component 102 may be 0.2 cm, 4.7 cm, 14.0 cm, 21 cm, 26 cm, 33.2 cm, 40.6 cm, 47 cm, 50 cm, or the like. Certainly, the width of the negative component 102 may alternatively be other values between 0.2 cm and 50 cm, which will not be listed one by one here.

Optionally, the thickness of the positive component 101 may be 0.2 cm, 0.4 cm, 0.51 cm, 2 cm, 2.7 cm, 3.42 cm, 4.6 cm, 4.67 cm, 5.0 cm, or the like. Certainly, the thickness of the positive component 101 may alternatively be other values between 0.2 mm and 5 cm, which will not be listed one by one here. The thickness of the negative component 102 may be 0.2 cm, 0.3 cm, 0.61 cm, 1 cm, 1.7 cm, 2.44 cm, 3.6 cm, 4.67 cm, 5.0 cm, or the like. Certainly, the width of the negative component 102 may alternatively be other values between 0.2 mm and 5 cm, which will not be listed one by one here.

In an example, both the positive component 101 and the negative component 102 are hard parts.

In some embodiments, a volume of the chip 10 ranges from 5 mm³ to 100 cm³, and a weight of the chip 10 ranges from 1 mg to 100 g. According to different battery structures 200, a size of the chip 10 may be correspondingly adjusted and modified to improve the adaptability of the chip 10.

Optionally, the volume of the chip 10 may be 5 mm³, 10 cm³, 22 cm³, 42 cm³, 67 cm³, 74 cm³, 82 cm³, 91 cm³, 95 cm³, 100 cm³, or the like. Certainly, the volume of the chip 10 may be other values between 5 mm³ and 100 cm³, which will not be listed one by one here. The weight of the chip 10 may be 1 mg, 4 mg, 125 mg, 800 mg, 1 g, 2 g, 15 g, 42 g, 76 g, 87 g, 100 g, or the like. Certainly, the weight of the chip 10 may be other values between 1 mg and 100 g, which will not be listed one by one here.

In some embodiments, a shape of the chip 10 may be a cuboid; or, a shape of the chip 10 may be a cube; or, a shape of the chip 10 may be a polyhedron. According to different structures of the battery 200, the shape of the chip 10 may be correspondingly adjusted and modified to improve the adaptability of the chip 10.

As shown in FIG. 5, in some embodiments, the detection structure further includes a detection tape 13. One end of the detection tape 13 is connected to the circuit structure, and the other end of the detection tape 13 extends out of the circuit structure. Specifically, a detection tape 13 may extend from a central position of the chip 10. The detection tape 13 may extend inside the electrode core 20 of the battery 200 to perform more premise monitoring on the battery 200.

In an example, the chip 10 includes a chip housing. One end of the detection tape 13 is connected to the circuit structure, and the other end of the detection tape 13 is located out of the chip housing.

Optionally, when the detection structure is a temperature sensor, a detection tape 13 may extend from a central position of the chip 10. The detection tape 13 may extend between an electrode plate and a separator inside the electrode core 20 to perform more premise temperature monitoring on the battery 200.

It is to be further noted that, according to a monitoring requirement, the number, the lengths, the widths, and the like of detection tapes 13 may be correspondingly modified and adjusted. A connection between a surface of a detection tape 13 and the chip 10 is coated by an insulating layer 30.

In some embodiments, a length of the detection tape 13 ranges from 0.5 cm to 100 cm; and/or, a width of the detection tape 13 ranges from 0.2 cm to 5 cm; and/or, a thickness of the detection tape 13 ranges from 0.2 mm to 1 cm. Thus, a size of the detection tape 13 may be adjusted according to a type and a size of the battery 200 and a monitoring type to improve the adaptability of the detection tape 13.

Optionally, the length of the detection tape 13 may alternatively be 0.5 cm, 4 cm, 17 cm, 21 cm, 54 cm, 94 cm, 100 cm, or the like. The width of the detection tape 13 may be 0.2 cm, 0.4 cm, 1.4 cm, 2.7 cm, 3.6 cm, 4.8 cm, 5.0 cm, or the like. The thickness of the detection tape 13 may be 0.2 cm, 0.3 cm, 0.4 cm, 0.6 cm, 0.7 cm, 0.9 cm, or 1 cm. Certainly, the length of the detection tape 13 may be other values between 0.5 cm and 100 cm, the width of the detection tape 13 may be other values between 0.2 cm and 5 cm, and the thickness of the detection tape 13 may be other values between 0.2 mm and 1 cm, which will not be listed one by one here.

As shown in FIG. 6 to FIG. 9, the battery 200 according to an embodiment of the present disclosure includes a battery housing, an electrode core 20, and a chip assembly 100 according to an embodiment of the present disclosure. A positive terminal 211 and a negative terminal 222 are arranged on the battery housing. The chip assembly 100 is arranged in the battery housing. The electrode core 20 is arranged in the battery housing. The electrode core 20 has a positive tab 201 and a negative tab 202. A positive component 101 and the positive tab 201 are connected to the positive terminal 211, and a negative component 102 and the negative tab 202 are connected to the negative terminal 222.

In a related art, a power battery management system usually adopts an external sensor. The external sensor monitors a battery module level. The content monitored by the external sensor includes voltage and temperature signals of the battery module level, which cannot monitor and evaluate a health state and a safety state of each battery inside the battery module. In the present disclosure, the chip assembly 100 is arranged inside the battery housing, and the chip assembly 100 can monitor a single battery 200 and an electrode core 20 of the battery 200, and can achieve high-precision evaluation and safety warning of an operation state and a health state of the battery 200 and the electrode core 20 of the battery 200, thereby greatly improving the safety performance of the battery 200.

According to the battery 200 in an embodiment of the present disclosure, the chip assembly 100 is arranged inside the battery housing, and the chip assembly 100 can monitor a single battery 200 and can achieve high-precision evaluation and safety warning of an operation state and a health state of the battery 200, thereby greatly improving the safety performance of the battery 200. Moreover, the chip assembly 100 is connected to the positive terminal 211 of the battery 200 through the positive component 101, the chip assembly 100 is connected to the negative terminal 222 of the battery 200 through the negative component 102, and a closed loop is formed between the chip assembly 100 and the electrode core 20 of the battery 200. The electrode core 20 of the battery 200 may supply power to the chip assembly 100 to form an integrated self-powered battery chip assembly, and the degree of integration of the battery 200 and the chip assembly 100 is improved. In addition, the positive component 101 and the positive tab 201 are connected to the positive terminal 211, and the negative component 102 and the negative tab 202 are connected to the negative terminal 222. On one hand, an internal structure of the battery 200 is more compact, and the space utilization rate of internal space of the battery 200 is improved. On the other hand, the electrode core 20 can be monitored to improve the accuracy of evaluation and the safety of the battery 200.

As shown in FIG. 6 to FIG. 8, in some embodiments, the battery housing includes a housing body (not shown), a positive cover plate 21, and a positive cover plate 22. The positive cover plate 21 is arranged at one end of the housing body, the positive terminal 211 is arranged on the positive cover plate 21, the negative cover plate 22 is arranged at the other end of the housing body, and the negative terminal 222 is arranged on the negative cover plate 22. The positive component 101 is arranged at the positive terminal 211, and the negative component 102 is arranged at the negative terminal 222. The chip 10 may be arranged at the positive terminal 211; or, the chip 10 may be arranged at the negative terminal 222; or, the chip 10 may be arranged at a position between the positive terminal 211 and the negative terminal 222. That is, a mounting position of the chip 10 in the battery housing may be changed. The placement of the chip 10 may be adjusted inside the battery 200 according to a requirement, so that state changes of different positions inside the battery 200 can be effectively monitored.

As shown in FIG. 6, in an example, the chip 10 and the positive component 101 are arranged at the positive terminal 211, the negative component 102 is arranged at the negative terminal 222, and the negative component 102 is connected to the chip 10 through the second conducting wire 12.

As shown in FIG. 7, in an example, the chip 10 and the negative component 102 are arranged at the negative terminal 222, the positive component 101 is arranged at the positive terminal 211, and the positive component 101 is connected to the chip 10 through the first conducting wire 11.

As shown in FIG. 8, in an example, the chip 10 is located at a position between the positive terminal 211 and the negative terminal 222, the positive component 101 is arranged at the positive terminal 211, and the positive component 101 is connected to the chip 10 through the first conducting wire 11. The negative component 102 is arranged at the negative terminal 222, and the negative component 102 is connected to the chip 10 through the second conducting wire 12.

As shown in FIG. 6, in some specific examples, the chip 10 is placed at the positive terminal 211 first, and then the positive component 101 of the chip 10 is connected to the positive tab 201 of the electrode core 20. A connection manner is one or a combination of an ultrasonic welding method and a laser welding method. After that, laser welding is performed on the positive tab 201 of the positive component 101 and the positive terminal 211 of the positive cover plate 21. The negative component 102 is connected to the chip 10 through the second conducting wire 12. The negative component 102 is placed at a negative electrode of the battery 200. The negative component 102 is welded with the negative tab 202 of the electrode core 20. After welding, laser welding is performed on the negative tab 202 and the negative terminal 222 on the negative cover plate 22. In this way, a positive electrode part of the chip 10 is connected to the positive tab 201, and a negative electrode part is connected to the negative tab 202, so that a closed loop is formed inside the battery 200 to supply power to the chip 10 to form an integrated self-powered chip.

As shown in FIG. 7, in some specific examples, the chip 10 is placed at the negative terminal 222 first, and then the negative component 102 of the chip 10 is connected to the negative tab 202 of the electrode core 20. A connection manner is one or a combination of an ultrasonic welding method and a laser welding method. After that, laser welding is performed on the negative tab 202 of the negative component 102 and the negative terminal 222 of the negative cover plate 22. The positive component 101 is connected to the chip 10 through the first conducting wire 11. The positive component 101 is placed at a positive electrode of the battery 200. The positive component 101 is welded with the positive tab 201 of the electrode core 20. After welding, laser welding is performed on the positive tab 201 and the positive terminal 211 on the positive cover plate 21. In this way, a positive electrode part of the chip 10 is connected to the positive tab 201, and a negative electrode part is connected to the negative tab 202, so that a closed loop is formed inside the battery 200 to supply power to the chip 10 to form an integrated self-powered chip.

As shown in FIG. 8, in some specific examples, the chip 10 is placed between the positive terminal 211 and the negative terminal 222. The positive component 101 is connected to the chip 10 through the first conducting wire 11. The positive component 101 is placed at a positive electrode of the battery 200. The positive component 101 is welded with the positive tab 201 of the electrode core 20. After welding, laser welding is performed on the positive tab 201 and the positive terminal 211 on the positive cover plate 21. The negative component 102 is connected to the chip 10 through the second conducting wire 12. The negative component 102 is placed at a negative electrode of the battery 200. The negative component 102 is welded with the negative tab 202 of the electrode core 20. After welding, laser welding is performed on the negative tab 202 and the negative terminal 222 on the negative cover plate 22. In this way, a positive electrode part of the chip 10 is connected to the positive tab 201, and a negative electrode part is connected to the negative tab 202, so that a closed loop is formed inside the battery 200 to supply power to the chip 10 to form an integrated self-powered chip.

In some examples not shown in the figures, the battery housing only includes a housing body and a positive cover plate 21. One end of the housing body has an opening. The positive cover plate 21 is arranged at the opening of the housing body. The positive terminal 211 is arranged on the positive cover plate 21. The positive component 101 and the positive tab 201 are connected to the positive terminal 211, the negative terminal 222 is arranged on the housing body and is in contact with the housing body, the negative component 102 and the negative tab 202 are connected to the negative terminal 222, and the housing body is negatively charged.

It is to be noted that the positive component 101 of the chip 10 is connected to the positive tab 201 of the electrode core 20, and the negative component 102 of the chip 10 is connected to the negative tab 202 of the electrode core 20. Then, the positive component 101 of the chip 10 and the negative component 102 of the chip 10 are welded to the corresponding positive terminal 211 and the negative terminal 222. This connection manner is simple and practical.

In some embodiments, the battery 200 may be a blade-shaped battery. For example, a length of the blade-shaped battery may range from 400 mm to 700 mm. For another example, the length of the blade-shaped battery may be greater than 700 mm. The battery 200 may alternatively be a cylindrical battery, or a square battery, or a soft pack battery. The chip 10 is applicable in these batteries 200. According to different structures of the battery 200, the shape, the structure, and the size of the chip 10 need to be correspondingly adjusted and modified.

In some specific examples, an insulating plate is arranged between the positive terminal 211 and the positive cover plate 21, and an insulating plate is arranged between the negative terminal 222 and the negative cover plate 22. The insulating plates are arranged, so that the positive terminal 211 and the negative terminal 222 are charged, and the positive cover plate 21 and the negative cover plate 22 are not charged, thereby avoiding a current being conducted to the housing body through the positive cover plate 21 and the negative cover plate 22, and reducing a short-circuit risk.

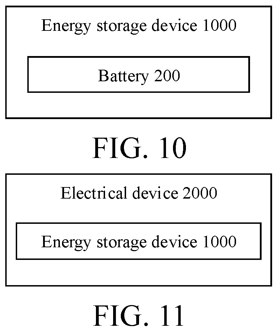

As shown in FIG. 10, an energy storage device 1000 according to an embodiment of the present disclosure includes multiple batteries 200 according to an embodiment of the present disclosure. The foregoing battery 200 is arranged, and the chip assembly 100 is arranged inside the battery housing. The chip assembly 100 may monitor a single battery 200 and can achieve high-precision evaluation and safety warning of an operation state and a health state of the battery 200, thereby greatly improving the safety performance of the battery 200. Moreover, the chip assembly 100 is connected to the positive terminal 211 of the battery 200 through the positive component 101, the chip assembly 100 is connected to the negative terminal 222 of the battery 200 through the negative component 102, and a closed loop is formed between the chip assembly 100 and the electrode core 20 of the battery 200. The electrode core 20 of the battery 200 may supply power to the chip assembly 100 to form an integrated self-powered battery chip assembly, and the degree of integration of the battery 200 and the chip assembly 100 is improved. In addition, the positive component 101 and the positive tab 201 are connected to the positive terminal 211, and the negative component 102 and the negative tab 202 are connected to the negative terminal 222. On one hand, an internal structure of the battery 200 is more compact, and the space utilization rate of internal space of the battery 200 is improved. On the other hand, the electrode core 20 can be monitored to improve the accuracy of evaluation and the safety of the battery 200. As shown in FIG. 11, an electrical device 2000 according to an embodiment of the present disclosure includes the energy storage device 1000 according to an embodiment of the present disclosure. The foregoing energy storage device 1000 is arranged, the chip assembly 100 is arranged inside the battery housing. The chip assembly 100 may monitor a single battery 200 and can achieve high-precision evaluation and safety warning of an operation state and a health state of the battery 200, thereby greatly improving the safety performance of the battery 200. Moreover, the chip assembly 100 is connected to the positive terminal 211 of the battery 200 through the positive component 101, the chip assembly 100 is connected to the negative terminal 222 of the battery 200 through the negative component 102, and a closed loop is formed between the chip assembly 100 and the electrode core 20 of the battery 200. The electrode core 20 of the battery 200 may supply power to the chip assembly 100 to form an integrated self-powered battery chip assembly, and the degree of integration of the battery 200 and the chip assembly 100 is improved. In addition, the positive component 101 and the positive tab 201 are connected to the positive terminal 211, and the negative component 102 and the negative tab 202 are connected to the negative terminal 222. On one hand, an internal structure of the battery 200 is more compact, and the space utilization rate of internal space of the battery 200 is improved. On the other hand, the electrode core 20 can be monitored to improve the accuracy of evaluation and the safety of the battery 200.

Optionally, the electrical device 2000 may be a vehicle, a ship, an airplane, a machine tool, a household appliance, and the like.

In the description of the present disclosure, it is to be understood that orientation or position relationships indicated by terms such as "longitudinal", "transverse", "length", "width", "thickness", "upper", "lower", "front", "back", "left", "right", "vertical", "horizontal", "top", "bottom", "inner", and "outer" are based on orientation or position relationships shown in accompanying drawings, and are used for facilitating describing the present disclosure and simplifying the description, rather than indicating or implying that the mentioned apparatus or element has to have a particular orientation or has to be constructed and operated in a particular orientation. Therefore, such terms cannot be construed as a limitation to the present disclosure.

In the present disclosure, unless otherwise explicitly specified and limited, terms such as "mount", "interconnect", "connect", and "fix" are to be understood in a broad sense, for example, may be a fixed connection, a detachable connection, or integration, may be a mechanical connection, an electrical connection or communication with each other, or may be a direct connection, an indirect connection through an intermediate medium, internal communication between two elements, or an interaction relationship between two elements. Those of ordinary skill in the art can understand specific meanings of the foregoing terms in the present disclosure according to specific situations.

In the description of this specification, descriptions with reference to terms such as "an embodiment", "some embodiments", "example", "specific example", or "some examples" means that specific features, structures, materials, or characteristics that are described with reference to the embodiment or the example are included in at least one embodiment or example of the present disclosure. In this specification, schematic descriptions of the foregoing terms are not necessarily directed at the same embodiment or example. In addition, the described specific features, structures, materials, or characteristics may be combined in a proper manner in any one or more of the embodiments or examples. In addition, those skilled in the art may joint and combine different embodiments or examples described in this specification.

Although the embodiments of the present disclosure have been shown and described above, it can be understood that, the foregoing embodiments are exemplary and are not to be understood as limitation to the present disclosure. Those of ordinary skill in the art can make changes, modifications, substitutions, and variations to the foregoing embodiments within the scope of the present disclosure.

## Claims

1. A chip assembly (100) for a battery (200), comprising:
a chip (10), the chip (10) comprising a circuit structure and a detection structure, the detection structure being electrically connected to the circuit structure;
a positive component (101), one end of the positive component (101) being electrically connected to the circuit structure, the other end of the positive component (101) being suitable for being connected to a positive electrode of the battery (200); and
a negative component (102), one end of the negative component (102) being electrically connected to the circuit structure, the other end of the negative component (102) being adapted to be connected to a negative electrode of the battery (200).

2. The chip assembly (100) according to claim 1, wherein the chip (10) further comprises a wireless transmission structure, the wireless transmission structure is electrically connected to the circuit structure, and the wireless transmission structure is at least configured to transmit a signal detected by the detection structure to an external device in a wireless communication manner.

3. The chip assembly (100) according to claim 1, wherein the positive component (101) is electrically connected to the circuit structure through a first conducting wire (11); and/or, the negative component (102) is electrically connected to the circuit structure through a second conducting wire (12).

4. The chip assembly (100) according to claim 3, wherein an outer surface of the first conducting wire (11) is coated with an insulating layer (30), and an outer surface of the second conducting wire (12) is coated with an insulating layer (30).

5. The chip assembly (100) according to any one of claims 1 to 4, wherein the chip (10) further comprises a chip housing, wherein the circuit structure and the detection structure are arranged in the chip housing, the other end of the positive component (101) and the other end of the negative component (102) are located outside the chip housing, and the outer surface of the chip housing is coated with an insulating layer (30).

6. The chip assembly (100) according to claim 1, wherein a length of each of the positive component (101) and the negative component (102) ranges from 0.3 cm to 200 cm; and/or, a width of each of the positive component (101) and the negative component (102) ranges from 0.2 cm to 50 cm; and/or, a thickness of each of the positive component (101) and the negative component (102) ranges from 0.2 mm to 5 cm.

7. The chip assembly (100) according to claim 1, wherein a volume of the chip (10) ranges from 5 mm³ to 100 cm³; and/or, a weight of the chip (10) ranges from 1 mg to 100 g.

8. The chip assembly (100) according to claim 1, wherein a shape of the chip (10) is a cuboid, a cube, or a polyhedron.

9. The chip assembly (100) according to claim 1, wherein the detection structure comprises a detection tape (13), one end of the detection tape (13) is connected to the circuit structure, and the other end of the detection tape (13) extends out of the circuit structure.

10. The chip assembly (100) according to claim 8, wherein a length of the detection tape (13) ranges from 0.5 cm to 100 cm; and/or, a width of the detection tape (13) ranges from 0.2 cm to 5 cm; and/or, a thickness of the detection tape (13) ranges from 0.2 mm to 1 cm.

11. A battery (200), comprising:
a battery housing, a positive terminal (211) and a negative terminal (222) being arranged on the battery housing; and
the chip assembly (100) according to any one of claims 1 to 10, the chip assembly (100) being arranged on the battery housing;
an electrode core (20), the electrode core (20) being arranged in the battery housing, the electrode core (20) having a positive tab (201) and a negative tab (202), a positive component (101) and the positive tab (201) are connected to the positive terminal (211), and a negative component (102) and the negative tab (202) are connected to the negative terminal (222).

12. The battery (200) according to claim 11, wherein the battery housing comprises a housing body, a positive cover plate (21), and a negative cover plate (22), the positive cover plate (21) is arranged at one end of the housing body, the positive terminal (211) is arranged on the positive cover plate (21), the negative cover plate (22) is arranged at the other end of the housing body, and the negative terminal (222) is arranged on the negative cover plate (22);
the positive component (101) is arranged at the positive terminal (211), the negative component (102) is arranged at the negative terminal (222), and the chip (10) is arranged at the positive terminal (211) or the negative terminal (222) or a position between the positive terminal (211) and the negative terminal (222).

13. An energy storage device (1000), comprising a plurality of batteries (200) according to claim 11 or 12.

14. An electrical device (2000), comprising the energy storage device (1000) according to claim 13.
